# EUROPÄISCHE PATENTSCHRIFT

(11) **EP 1 097 113 B1**
(45) Veröffentlichungstag und Bekanntmachung des Hinweises auf die Patenterteilung: **22.11.2006**
(21) Anmeldenummer: 99939339.0
(22) Anmeldetag: 15.06.1999
(51) Int. Cl.: C04B 35/66, C04B 35/043

(54) **MONOLITHISCH AUFGEBAUTER, BASISCHER, FEUERFESTER KERAMISCHER HOHLKÖRPER**
MONOLITHIC BASIC REFRACTORY CERAMIC HOLLOW BODY
CORPS CREUX CERAMIQUE MONOLITHIQUE BASIQUE REFRACTAIRE

(30) Priorität: 26.06.1998 DE 19828511
(43) Veröffentlichungstag der Anmeldung: 09.05.2001
(73) Patentinhaber: DIDIER-WERKE AG, 65189 Wiesbaden (DE)
(72) Erfinder: LEE, Steven, Cardross G82 52T (GB); MASURAT, Dirk, 52146 Würselen (DE); PROUDFOOT, Ian, Old Kilpatrick, Glasgow (GB); McINTOSH, Jim, Glasgow G61 35N (GB)
(74) Vertreter: Becker, Thomas
(86) Internationale Anmeldenummer: PCT/DE1999/001760
(87) Internationale Veröffentlichungsnummer: WO 2000/000450

(56) Entgegenhaltungen:
- WO-A-96/34838
- DATABASE CHEMABS [Online] CHEMICAL ABSTRACTS SERVICE, COLUMBUS, OHIO, US TOSHIBA CERAMICS CO., LTD., JAPAN: "Immersion nozzles for continuous casting of steel" retrieved from STN Database accession no. 99:180528 CA XP002120093 & JP 58 120569 A (TOSHIBA CERAMICS CO., LTD., JAPAN) 18. Juli 1983 (1983-07-18)
- BRON V A ET AL: "REFRACTORIES FROM GRANULAR MAGNESITE-GRAPHITE COMPOUNDS" REFRACTORIES JUL-AUG 1974, Bd. 15, Nr. 7-8, Juli 1974 (1974-07), Seiten 434-438, XP002120092
- DATABASE WPI Section Ch, Week 199142 Derwent Publications Ltd., London, GB; Class A81, AN 1991-306911 XP002120094 & JP 03 205349 A (KAWASAKI ROZAI KK), 6. September 1991 (1991-09-06)

## Beschreibung

Die Erfindung betrifft einen basischen, feuerfesten keramischen Hohlkörper. Der Begriff "Hohlkörper" umfaßt solche geformten Feuerfestteile, die innerhalb ihrer Außenabmessungen nicht ausschließlich aus mindestens einem feuerfesten Werkstoff bestehen. Die Erfindung umfaßt also nicht Steine, Blöcke, Platten oder dergleichen, sondern in erster Linie solche Hohlkörper, die mit mindestens einer Bohrung, mindestens einer Durchgangsöffnung beziehungsweise als Rohr oder nach Art eines Ausgusses gestaltet sind. Im besonderen gehören hierzu Schattenrohre, Eintauchausgüsse, Tundish-Ausgüsse, Hülsen, sogenannte Stopfen etc.

Sowohl der Stand der Technik wie die Erfindung werden nachstehend anhand eines Eintauchausgusses näher beschrieben, der stellvertretend für alle Arten der vorgenannten Hohlkörper steht.

Die WO-A-9634838 offenbart einen Tauchausguss aus 30 bis 70 Gew.-% Dolomit und mindestens 25 Gew.-% Graphit. Bei einem MgO-Gehalt des Dolomits von circa 41,5 Gew.-% ergibt sich ein maximaler MgO-Anteil im Versatz von 29 Gew.-%. Die Porosität ist mit maximal 16 % angegeben.

Database CHEMABS WPI Accession Number 1983-744544 ist ein Ausguss mit 35 bis 70 Gew.-% MgO, 5 bis 4.0 Gew.-% Graphit und 25 bis 35 Gew.-% neutralen feuerfesten Komponenten zu entnehmen. Angaben zur Porosität wurden nicht gemacht.

Aus der Praxis sind Eintauchausgüsse auf Basis von Aluminiumoxid mit Kohlenstoff-Bindung bekannt. Aufgrund der schlechten Temperaturwechselbeständigkeit dieses Werkstoffes ist es auch bekannt, den Einlaufbereich des Eintauchausgusses aus einem Werkstoff auf MgO-C-Basis auszubilden. Dabei wurden die beiden Werkstoffe getrennt in eine entsprechende Form eingefüllt und anschließend gemeinsam gepreßt. Ein solches Herstellungsverfahren ist aufwendig und teuer. Außerdem bildet der Übergangsbereich der Abschnitte aus unterschiedlichen Werkstoffen Probleme aufgrund unterschiedlichen Wärmedehnungsverhaltens bei der Anwendung.

Auch die Schlackenbeständigkeit derartiger Eintauchausgüsse ist meist unbefriedigend, weshalb vorgeschlagen wurde, den Schlackenbereich derartiger Eintauchausgüsse mit einer in besonderer Weise schlackenresistenten Manschette zu schützen. Als Werkstoff für eine solche Manschette wurden Werkstoffe auf Basis ZrO₂ oder ZrO₂-C vorgeschlagen.

Dies gilt auch für den aus der EP 0 423 793 A2 bekannten Eintauchausguß, der im übrigen aus einem Werkstoff auf Basis von Bornitrid und Zirkoniumdioxid sowie Sinterhilfsmitteln besteht.

Auch hier gilt aber, daß die Verwendung unterschiedlicher Werkstoffe beziehungsweise die Ausbildung einer Manschette in dem Bereich, gegen den bei der Anwendung eine auf der Metallschmelze aufschwimmende Schlacke anliegt, herstellungstechnisch aufwendig ist.

Der Erfindung liegt insoweit die Aufgabe zugrunde, einen feuerfesten keramischen Hohlkörper für metallurgische Anwendungen bereitzustellen, der einfach herstellbar ist, eine gute Temperaturwechselbeständigkeit und Temperaturschockbeständigkeit aufweist, ein gutes Resistenzverhalten gegenüber metallurgischen Schlacken besitzt und vorzugsweise aus relativ einfachen Werkstoffsorten aufgebaut werden kann.

Dabei ist ein solcher Hohlkörper insbesondere für solche Anwendungen vorgesehen, bei denen eine Metallschmelze den Hohlkörper durchströmt oder der Hohlkörper zumindest mit einer Metallschmelze oder einer metallurgischen Schlacke in Berührung kommt.

Überraschend wurde festgestellt, daß ein derartiger Hohlkörper ohne weiteres aus einer einzigen Werkstoffsorte monolithisch aufgebaut sein kann. Mit anderen Worten: der erfindungsgemäße Hohlkörper besteht durchgehend aus ein und demselben Werkstoff. Es kann sowohl auf getrennte Werkstoffe im Einlauf- wie Eintauchbereich oder Schlackenbereich verzichtet werden, wenngleich diese (zusätzlich) möglich sind. Der Hohlkörper wird als isostatisch gepreßtes Bauteil hergestellt, welches durchgehend isotrope physikalische, chemische und metallurgische Eigenschaften besitzt. Gemäß der Erfindung basiert der für den Hohlkörper zu verwendende Werkstoff auf einem Versatz aus 10 bis 40 Masse-% Kohlenstoff (elementarem Kohlenstoff, insbesondere in Form von Graphit), 50 bis 89 Masse-% MgO und/oder Dolomit und 1 bis 35 Massen-% sonstigen Komponenten.

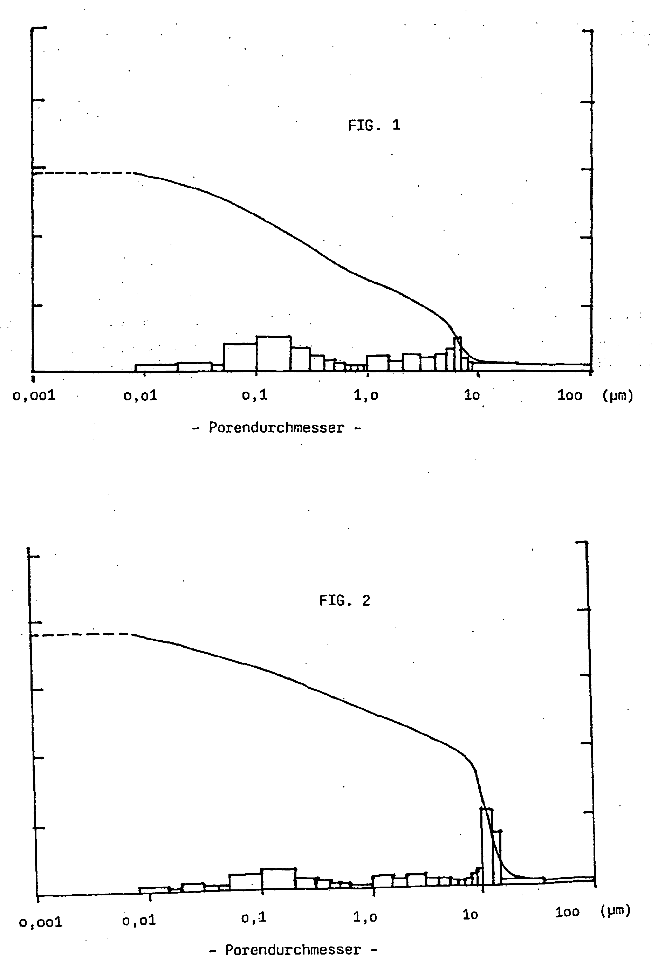

Die Auswahl der Werkstoffkomponenten, insbesondere hinsichtlich ihrer Körnung und die Herstellung des Hohlkörpers hat nach der Vorgabe zu erfolgen, daß der fertige Hohlkörper ein offenes Porenvolumen zwischen 5 und 20 Vol.-% mit einem Anteil an Poren im Bereich 0,1 bis 15 µm mit der Maßgabe aufweist, dass sich im relevanten Porengrößenbereich bei logarithmischen Auftrag der Porendurchmesser gegenüber dem absoluten Anteil der entsprechenden Porendurchmesser gleiche Werte ergeben. "Gleiche Werte" im technischen Sinne bedeutet, dass beispielsweise der Anteil der Poren mit einem Durchmesser 0,1 bis 0,2 µm (bzw. 1 bis 2 µm) im wesentlichen gleich dem Anteil der Poren mit einem Durchmesser von 0,2 bis 0,3 µm (bzw. 2 bis 3 µm), im wesentlichen gleich dem Anteil der Poren mit einem Durchmesser 0,3 bis 0,4 µm (bzw. 3 bis 4 µm) usw. ist. Insgesamt soll sich bei logarithmischen Auftrag der Kornfraktionen im genannten Intervall 0,1 bis 15 µm (gegen die relative Porenhäufigkeit in % auf der Ordinate) eine Verteilung ohne krasse "peaks", also eine mehr oder weniger "glatte "Kurve" ergeben, ähnlich Figur 1; im Gegensatz zu Figur 2, wo die Kornfraktion > 10 µm einen charakteristischen, unerwünschten "peak" aufweist.

Lediglich der Porenanteil mit einem mittleren Durchmesser < 0,1 µm beziehungsweise > 15 µm darf stärkeren Schwankungen hinsichtlich seiner absoluten Werte unterliegen.

Durch den Einsatz eines im wesentlichen hoch kohlenstoffhaltigen Materials führt der genannte Werkstoff zu einer Reduzierung der Wärmedehnung bei der Anwendung und ist mitverantwortlich für eine Optimierung der Mikroporenverteilung in vorgenanntem Sinne, wodurch ein sehr gutes Thermoschockverhalten resultiert. Die Verwendung eines Werkstoffes der vorgenannten Zusammensetzung führt beispielsweise bei 1.000° C zu einem Wert der Wärmedehnung von 0,45 %, während Werkstoffe, die beispielsweise nur 14 Masse-% Graphit neben 80 Masse-% MgO und sonstigen Bestandteilen enthalten, zu einem Wärmedehnungswert von 0,65 % bei 1.000° C führen.

Nach einer Ausführungsform besteht der Versatz aus 20 bis 35 Masse-% Kohlenstoff, 60 bis 75 Masse-% MgO und 1 bis 10 Masse-% sonstigen Komponenten.

Zu letzteren gehören beispielsweise sogenannte Antioxidantien, wie Si-Metall oder auch Carbide, wie Borcarbid.

Zu den sonstigen Komponenten gehören auch geringe Anteile an nicht basischen feuerfesten Metalloxiden, wie calcinierter Tonerde, deren Anteil jedoch auf Werte < 5 Masse-% begrenzt werden soll.

Die MgO-Komponente des Versatzes kann teilweise oder ganz durch Dolomit ersetzt werden.

Die Eigenschaften des gebrannten Hohlkörpers resultieren aus der Erkenntnis, dass dazu die Versatzkomponenten vor der Formgebung homogen vermischt und in Granulatform aufbereitet werden, der Versatz also aus einer granulatartig aufbereiteten Mischung der Versatzkomponenten besteht, wobei die Granalien einen mittleren Durchmesser zwischen 0,1 und 2,5 mm aufweisen.

Hierdurch läßt sich nicht nur die Verarbeitbarkeit und Homogenität verbessern; insbesondere kann hierdurch auch der Gefügeaufbau und insbesondere dessen Porenverteilung in vorgenanntem Sinne optimiert werden.

Die Temperaturwechselbeständigkeit läßt sich durch Zugabe von Nitriden, insbesondere Siliciumnitrid, insbesondere in Anteilen zwischen 1 und 5 Masse-%, weiter verbessern.

Der besondere Vorteil besteht darin, daß der Hohlkörper monolithisch aufgebaut ist und aufgrund der Abstimmung zwischen der Werkstoffauswahl einerseits und dem Porenvolumen sowie der Porenverteilung andererseits eine sehr gute Temperaturwechselbeständigkeit besitzt und vor allem ohne zusätzliche, insbesondere werkstoffmäßig veränderte Schutzzonen auch gegenüber metallurgischen Schlacken eine gute Beständigkeit aufweist.

Die Erfindung wird nachstehend anhand eines Ausführungsbeispieles näher erläutert.

Dabei werden den erfindungsgemäßen Werten solche nach dem Stand der Technik gegenübergestellt, die jeweils in Klammern den erfindungsgemäßen Werten nachgestellt sind.

Zur Herstellung eines Eintauchausgusses wird ein Versatz aus 27 (14) Masse-% Graphit, 65 (82,5) Masse-% MgO, 4 (0) Masse-% Al₂O₃ und 4 (3,5) Masse-% Si-Metall durch Mischen (Homogenisieren) aufbereitet.

Der erfindungsgemäße Versatz wird anschließend auf einem Granulierteller zu Granalien mit einem mittleren Durchmesser zwischen 0,5 und 2,0 mm verarbeitet, während der Vergleichs-Versatz unverändert bleibt.

Beide Versätze werden anschließend in gleicher Weise isostatisch zu einem Eintauchausguß verpreßt. Es ergibt sich ein Raumgewicht von 2,4 (2,5) g/cm³ und eine offene Porosität von 13,5 (16,5) Vol.-% gemäß EN 993-1.

Die Wärmedehnung bei 1.000° C wurde zu 0,45 (0,60) %, bei 1.500° C zu 0,9 (1,1) % bestimmt (gemäß DIN 51045).

Die Porenverteilung für den bei 1000° C gebrannten erfindungsgemäßen Eintauchausguß ergibt sich aus Figur 1, die Porenverteilung für den Vergleichskörper aus Figur 2.

Ein Vergleich beider Figuren zeigt, daß die Porenverteilung für den erfindungsgemäßen Hohlkörper 7 wesentlich gleichmäßiger (nahezu konstant) gegenüber dem Vergleichskörper ist, der bei 10 µm einen starken peak zeigt. Die beim Beispiel gemäß Figur 1 "konstantere" Porenverteilung im Bereich 0,1 bis 15 µm führt zu einer verbesserten Temperatur-Wechselbeständigkeit durch Vermeidung von "Porenanhäufungen" mit in Bezug auf die Aufgabenstellung ungünstiger, schwankender Porenverteilung im genannten Intervall.

## Patentansprüche

1. Monolithisch aufgebauter, basischer, feuerfester keramischer Hohlkörper für metallurgische Anwendungen, erhalten aus einem Werkstoffversatz aus 10 bis 40 Masse-% Kohlenstoff, 50 bis 89 Masse-% MgO und/oder Dolomit, sowie 1 bis 35 Masse-% sonstige Komponenten, der zu Granalien mit einem mittleren Durchmesser zwischen 0,1 und 2,5 mm aufbereitet und unter Ausbildung eines offenen Porenvolumens zwischen 5 und 20 Vol.-% mit einem weitestgehend konstanten Anteil an Poren im Bereich 0,1 bis 15 µm isostatisch gepresst und gebrannt wurde.

2. Hohlkörper nach Anspruch 1, bei dem der Versatz aus 20 bis 35 Masse-% Kohlenstoff, 60 bis 75 Masse-% MgO und 1 bis 10 Masse-% sonstigen Komponenten besteht.

3. Hohlkörper nach Anspruch 1, bei dem die sonstigen Versatzkomponenten Antioxidantien, insbesondere Si-Metall umfassen.

4. Hohlkörper nach Anspruch 1, bei dem die sonstigen Versatzkomponenten 1 bis 5 Masse-% nicht basische feuerfeste Metalloxide umfassen.

5. Hohlkörper nach Anspruch 1, bei dem die sonstigen Versatzkomponenten 1 bis 5 Masse-% Nitride, insbesondere Siliciumnitrid, umfassen.

6. Hohlkörper nach Anspruch 1, mit einer Wärmedehnung gemäß DIN 51045 bei 1000°C < 0,5 % und/oder bei 1500°C < 1,0 %.

7. Hohlkörper nach Anspruch 1, mit einem offenen Porenvolumen zwischen 5 und 15 Vol.-% (gemäß EN 993-1).

## Claims

1. Alkaline, refractory ceramic hollow item of monolithic structure for metallurgical applications, made of
a) a batch comprising 10 to 40 %w/w carbon, 50 to 89 %w/w of MgO and/or doloma and 1 to 35 %w/w of other components, prepared as granules with an average diameter of between 0.1 and 2.5 mm and isostatically press-molded and fired by forming an open pore volume of between 5 and 20 %v/v, with a most constant possible share of pores ranging from 0.1 to 15 µm.

2. Hollow item according to claim 1, in which the batch comprises 20 to 35 %w/w of carbon, 60 to 75 %w/w of MgO and 1 to 10 %w/w of other components.

3. Hollow item according to claim 1, in which the other batch components comprise antioxidants, in particular Si-metal.

4. Hollow item according to claim 1, in which the other batch components comprise 1 to 5 %w/w of non-alkaline, refractory metal oxides.

5. Hollow item according to claim 1, in which the other batch components comprise 1 to 5 %w/w nitride, in particular silicon nitride.

6. Hollow item according to claim 1, with a thermal expansion according to DIN 51045 of < 0.5 % at 1000 °C, < 1.0 % at 1500 °C, or both.

7. Hollow item according to claim 1, with an open pore volume of between 5 and 15 %v/v (according to EN 993-1).

## Revendications

1. Corps creux céramique réfractaire monolithique basique pour des applications métallurgiques, obtenu à partir d'une composition de matériaux formée de 10 à 40 % en masse de carbone, 50 à 89 % en masse de MgO et/ou dolomite, ainsi que 1 à 35 % en masse d'autres constituants, lequel a été préparé sous forme de granulats avec un diamètre moyen entre 0,1 et 2,5 mm et a été soumis à un pressage isostatique et cuit moyennant la réalisation d'un volume de pores ouverts entre 5 et 20 % en volume avec une proportion largement constante de pores dans le domaine de 0,1 à 15 µm.

2. Corps creux selon la revendication 1, dans lequel la composition est formée de 20 à 35 % en masse de carbone, 60 à 75 % en masse de MgO et 1 à 10 % en masse d'autres constituants.

3. Corps creux selon la revendication 1, dans lequel les autres constituants sont des antioxydants, en particulier du Si métallique.

4. Corps creux selon la revendication 1, dans lequel les autres constituants sont 1 à 5 % en masse d'oxydes métalliques réfractaires non basiques.

5. Corps creux selon la revendication 1, dans lequel les autres constituants sont 1 à 5 % en masse de nitrures, en particulier du nitrure de silicium.

6. Corps creux selon la revendication 1, dans lequel une dilatation thermique selon DIN 51045 est inférieure à 0,5 % à 1 000°C et/ou inférieure à 1,0 % à 1 500°C.

7. Corps creux selon la revendication 1, avec un volume de pores ouverts entre 5 et 15 % en volume (selon EN 993-1).
